# EUROPÄISCHE PATENTANMELDUNG

(11) **EP 2 527 559 A1**
(43) Veröffentlichungstag der Anmeldung: **28.11.2012**
(21) Anmeldenummer: 12161438.2
(22) Anmeldetag: 27.03.2012
(51) Int. Cl.: E04F 15/10, E04C 2/18, E04C 2/22, B29C 47/00, B29C 65/02, B29C 65/48

(54) **Paneel und Verfahren zum Herstellen eines Paneels**

(30) Priorität: 24.05.2011 DE 102011050618
(71) Anmelder: Novo-Tech GmbH & Co. KG, 06449 Aschersleben (DE)
(72) Erfinder:
(74) Vertreter: Dantz, Jan Henning

(57) **Zusammenfassung**

Ein Paneel (1), insbesondere als Boden- oder Wandbelag, umfasst einen extrudierten Formkörper aus einer Mischung aus Naturfasern und einem Polymerwerkstoff oder anderen Kunststoffen, wobei in dem extrudierten Formkörper mindestens eine Kammer ausgebildet ist, in der ein Verstärkungsprofil (5) angeordnet ist. Ferner wird gemäß einem Verfahren zum Herstellen eines Paneels der Formkörper aus einer Mischung aus Naturfasern und einem Polymerwerkstoff oder anderen Kunststoffen extrudiert mit mindestens einer Kammer und einem Verstärkungsprofil (5) in die mindestens eine Kammer eingebracht und festgelegt. Dadurch kann das Paneel (1) stabil ausgebildet werden, wobei der Formkörper mit geringen Wandstärken ausgebildet sein kann.

## Beschreibung

Die vorliegende Erfindung betrifft ein Paneel, insbesondere als Boden- oder Wandbelag, mit einem extrudierten Formkörper aus einer Mischung aus Naturfasern und einem Polymerwerkstoff und/oder anderen Kunststoffen sowie ein Verfahren zum Herstellen eines solchen Paneels.

Die EP 1 524 385 offenbart ein extrudiertes Paneel aus einer Mischung aus Naturfasern und einem Polymerwerkstoff, der als Bodenbelag an einer Unterkonstruktion festgelegt werden kann. Solche Paneele haben sich an sich bewährt, besitzen allerdings aufgrund der hohen Dichte des extrudierten Materials ein hohes Gewicht. Zudem sind die Wandstärken der einzelnen Stege des extrudierten Formkörpers vergleichsweise dick ausgebildet, um eine hohe Stabilität zu erreichen.

Es ist daher Aufgabe der vorliegenden Erfindung, einen extrudierten Formkörper mit hoher Stabilität bereitzustellen, der mit einfachen Mitteln verstärkt ist. Ferner soll ein Verfahren zur Herstellung eines solchen Paneels bereitgestellt werden.

Diese Aufgabe wird mit einem Paneel mit den Merkmalen des Anspruches 1 sowie einem Verfahren zum Herstellen eines Paneels mit den Merkmalen des Anspruches 12 gelöst.

Erfindungsgemäß ist in dem extrudierten Formkörper mindestens eine Kammer ausgebildet, in der ein Verstärkungsprofil angeordnet ist. Dadurch kann das Paneel besonders formsteif ausgebildet werden, wobei die Wandstärken des extrudierten Formkörpers und der Materialeinsatz im Verhältnis zur Festigkeit gering sind, denn durch das Verstärkungsprofil kann weniger Extrusionsmaterial eingesetzt werden und zudem kann das Gewicht des Paneels reduziert werden, wenn das Verstärkungsprofil leichter als die Extrusionsmasse ausgebildet ist.

Vorzugsweise ist das Verstärkungsprofil als Holzprofil ausgebildet. Der Einsatz von gewachsenen Hölzern besitzt den Vorteil, dass diese bei geringem Gewicht eine hohe Festigkeit aufweisen. Zudem ergänzen sich die Materialien hervorragend, weil der extrudierte Formkörper aus einer Mischung aus Naturfasern und einem Polymerwerkstoff und/oder anderen Kunststoffen eine Schutzhülle bildet, so dass das Holzprofil keinen Umgebungseinflüssen ausgesetzt ist, beispielsweise Pilzbefall, Fäulnis oder Verrottung, so dass die Nutzungszeit des Holzprofils erheblich verlängert werden kann. Vorzugsweise ist das Holzprofil zumindest an allen Längsseiten von dem extrudierten Formkörper umgeben.

Für eine besonders hohe Stabilität ist das Verstärkungsprofil in der Kammer festgelegt. Dabei kann das Holzprofil in der Kammer verklebt sein und nachträglich eingebracht werden. Es ist auch möglich, das Verstärkungsprofil klemmend in einer Kammer festzulegen, beispielsweise wenn der noch warme extrudierte Formkörper eine Hohlkammer ausbildet, in die dann das Verstärkungsprofil eingeschoben wird. Beim Abkühlen schrumpft dann das extrudierte Material geringfügig zusammen und kann das Verstärkungsprofil klemmend festlegen.

Gemäß einer bevorzugten Ausgestaltung wird das Verstärkungsprofil in den Formkörper einextrudiert. Dadurch wird eine besonders gute Verbindung zwischen Verstärkungsprofil und Formkörper erhalten. Zudem kann bei Einsatz eines Holzprofils als Verstärkungsprofil eine stabile Verbindung und ein Schutz des Holzprofils vor Umgebungseinflüssen erhalten werden.

Für eine materialsparende Herstellung des Formkörpers kann ein Steg zwischen einer Oberseite des Paneels und dem Verstärkungsprofil eine Dicke von weniger als 4 mm, insbesondere weniger als 3 mm, aufweisen. Auch an der Unterseite des Paneels kann ein Steg mit einer entsprechend geringen Dicke hergestellt werden.

Gemäß einer weiteren Ausgestaltung der Erfindung ist mindestens eine Stirnseite des Paneels versiegelt. Dadurch kann verhindert werden, dass auf das Verstärkungsprofil, insbesondere das Holzprofil, Umgebungseinflüsse wirken, die die Nutzungsdauer des Holzprofils reduzieren könnten. Die Versiegelung kann durch eine Kappe oder anderes Versiegelungsmaterial erfolgen.

Vorzugsweise ist integral mit dem Formkörper an mindestens einer Längsseite eine Nut zur Fixierung des Paneels an einer Unterkonstruktion oder einem benachbarten Paneel ausgebildet. An der gegenüberliegenden Seite kann wahlweise ebenfalls eine Nut oder eine Feder ausgebildet sein, so dass das Paneel auf einfache Weise fixiert werden kann.

Das Verstärkungsprofil ist vorzugsweise im Querschnitt im Wesentlichen rechteckförmig ausgebildet. Es ist natürlich möglich, auch andere Geometrien als Verstärkungsprofil einzusetzen, beispielsweise dreieckige oder asymmetrische Formen.

Bei dem erfindungsgemäßen Verfahren wird ein Formkörper aus einer Mischung aus Naturfasern und einem Polymerwerkstoff und/oder anderen Kunststoffen extrudiert, wobei in mindestens eine Kammer ein Verstärkungsprofil eingebracht und festgelegt wird. Das Verstärkungsprofil kann dabei vor bzw. während der Extrusion zugeführt und in den Formkörper einextrudiert werden. Alternativ ist es möglich, das Verstärkungsprofil in dem Formkörper einzukleben oder auch klemmend festzulegen. Hierfür kann das Abkühlen des Formkörpers und der damit verbundene Schrumpfungsprozess genutzt werden, um ein Verstärkungsprofil klemmend in einer Kammer festzulegen.

Die Erfindung wird nachfolgend anhand eines Ausführungsbeispiels mit Bezug auf die beigefügten Zeichnungen näher erläutert. Es zeigen:

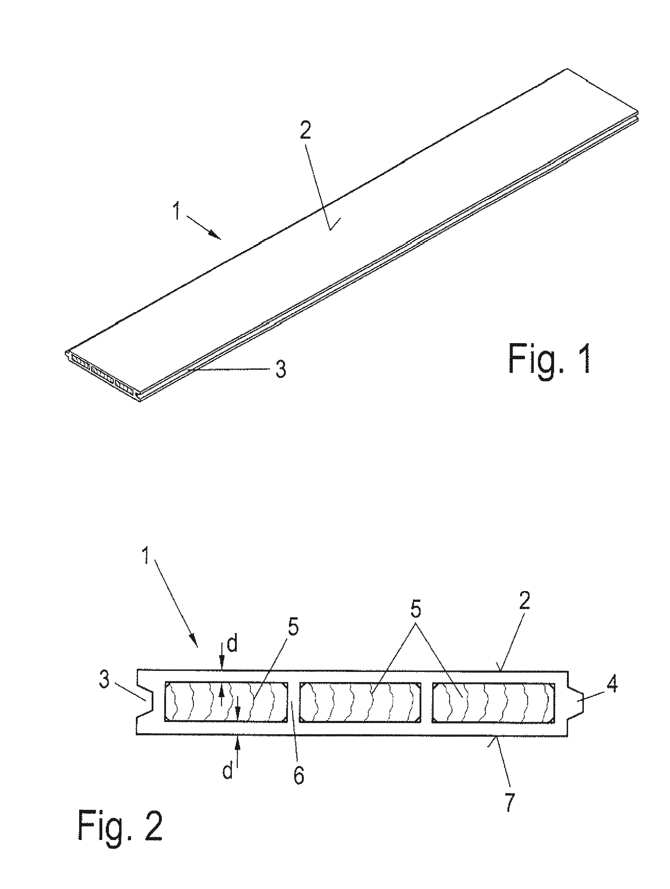

- Figur 1: eine perspektivische Ansicht eines erfindungsgemäßen Paneels, und
- Figur 2: eine Querschnittsansicht des Paneels der Figur 1.

Ein Paneel 1 umfasst eine Oberfläche 2, beispielsweise eine begehbare Oberfläche, die einen Bodenbelag bildet, beispielsweise für Terrassen, Balkone, Transportböden oder andere Einsatzzwecke. An einer Längsseite des plattenförmigen Paneels 1 ist eine Nut 3 ausgebildet, die zur Festlegung des Paneels 1 an einer Unterkonstruktion oder zur Verbindung mit einem benachbarten Paneel dient. An der gegenüberliegenden Längsseite ist in dem gezeigten Ausführungsbeispiel eine Feder 4 ausgebildet, die im Wesentlichen formschlüssig in die Nut 3 einfügbar ist. Es ist natürlich möglich, statt der Feder 4 ebenfalls eine Nut 3 vorzusehen.

Das Paneel 1 besitzt einen extrudierten Formkörper, der aus einer Mischung aus Naturfasern und einem Polymerwerkstoff und/oder anderen Kunststoffen hergestellt ist. Als Naturfasern können insbesondere Holzspäne, Holzfasern, Reisschalen oder andere natürliche Fasern eingesetzt werden, die mit einem Polymerwerkstoff und/oder anderen Kunststoffen, insbesondere Polypropylen oder Polyethylen, gemischt und extrudiert werden.

Zwischen einer Oberseite 2 und einer Unterseite 7 eines Paneels 1 sind mehrere Kammern ausgebildet, in die Verstärkungsprofile 5 eingefügt sind. Die Verstärkungsprofile 5 sind über vertikale Trennstege 6 voneinander beabstandet. Eine Dicke d zwischen der Oberseite 2 und dem Verstärkungsprofil 5 und der Unterseite 7 und dem Verstärkungsprofil 5 sowie der Breite der Mittelstege 6 kann in einem Bereich zwischen 2 mm und 5 mm, insbesondere 3 mm bis 4 mm, liegen.

Das Verstärkungsprofil 5 besteht vorzugsweise aus Holz, wobei auch andere Materialien, beispielsweise Aluminium oder Kunststoffe eingesetzt werden können. Das Verstärkungsprofil 5 besitzt eine im Wesentlichen rechteckige Querschnittskontur und ist geschützt im Inneren des extrudierten Formkörpers angeordnet.

Das Verstärkungsprofil 5 kann in dem Formkörper eingeklebt sein, wobei dann entsprechendes Klebemittel zur mechanischen Festlegung des Verstärkungsprofils 5 an den Innenwänden einer Kammer des Formkörpers dient.

Alternativ ist es möglich, die Verstärkungsprofile 5 während der Extrusion zuzuführen und in den Formkörper einzuextrudieren. Dadurch wird eine besonders stabile Verbindung zwischen dem Verstärkungsprofil 5 und dem Formkörper erhalten. Zudem ist bei Einsatz eines Holzprofils als Verstärkungsprofil dieses besonders gut gegen Umgebungseinflüsse geschützt.

Ferner ist es möglich, das Verstärkungsprofil 5 klemmend festzulegen. Bei der Extrusion wird der Formkörper auf höhere Temperaturen erhitzt, beispielsweise über 80° C, so dass dann in das noch warme extrudierte Material ein Verstärkungsprofil 5 eingeschoben werden kann. Durch Abkühlen des Formkörpers auf Umgebungstemperatur erfolgt eine geringfügige Schrumpfung, die ausreichend ist, um das Verstärkungsprofil 5 klemmend festzulegen.

Es ist möglich, eine Stirnseite des Paneels 1 oder beide Stirnseiten zu versiegeln, damit keine Umgebungseinflüsse auf das Verstärkungsprofil 5 einwirken können.

Die Form und Gestaltung des extrudierten Formkörpers kann in weiten Bereichen variiert werden. Statt einer glatten Oberfläche kann auch eine rutschhemmende profilierte Oberfläche extrudiert werden. Zudem können auch Hohlkammern in dem extrudierten Profil vorgesehen werden, in denen kein Verstärkungsprofil 5 eingelegt ist.

## Patentansprüche

1. Paneel (1), insbesondere als Boden- oder Wandbelag, mit einem extrudierten Formkörper aus einer Mischung aus Naturfasern und einem Polymerwerkstoff oder anderen Kunststoffen, **dadurch gekennzeichnet, dass** in dem extrudierten Formkörper mindestens eine Kammer ausgebildet ist, in der ein Verstärkungsprofil (5) angeordnet ist.

2. Paneel nach Anspruch 1, **dadurch gekennzeichnet, dass** das Verstärkungsprofil (5) als Holzprofil ausgebildet ist.

3. Paneel nach Anspruch 1 oder 2, **dadurch gekennzeichnet, dass** das Verstärkungsprofil (5) in der Kammer festgelegt ist.

4. Paneel nach einem der vorhergehenden Ansprüche, **dadurch gekennzeichnet, dass** das Holzprofil in der Kammer verklebt ist.

5. Paneel nach einem der Ansprüche 1 bis 3, **dadurch gekennzeichnet, dass** das Verstärkungsprofil (5) klemmend in der Kammer festgelegt ist.

6. Paneel nach einem der Ansprüche 1 bis 3, **dadurch gekennzeichnet, dass** das Verstärkungsprofil (5) in den Formkörper einextrudiert ist.

7. Paneel nach einem der vorhergehenden Ansprüche, **dadurch gekennzeichnet, dass** das Paneel (1) mehrere in Längsrichtung verlaufende Kammern aufweist, in die jeweils ein Verstärkungsprofil (5) eingefügt ist.

8. Paneel nach einem der vorhergehenden Ansprüche, **dadurch gekennzeichnet, dass** ein Steg des Formkörpers zwischen einer Oberseite (2) des Paneels (1) und dem Verstärkungsprofil (5) eine Dicke von weniger als 4 mm, insbesondere weniger als 3 mm, aufweist.

9. Paneel nach einem der vorhergehenden Ansprüche, **dadurch gekennzeichnet, dass** mindestens eine Stirnseite des Paneels (1) versiegelt ist.

10. Paneel nach einem der vorhergehenden Ansprüche, **dadurch gekennzeichnet, dass** integral mit dem Formkörper an mindestens einer Längsseite eine Nut (3) zur Fixierung des Paneels (1) an einer Unterkonstruktion oder einem benachbarten Paneel (1) ausgebildet ist.

11. Paneel nach einem der vorhergehenden Ansprüche, **dadurch gekennzeichnet, dass** das Verstärkungsprofil (5) im Querschnitt im Wesentlichen rechteckförmig ausgebildet ist.

12. Verfahren zum Herstellen eines Paneels (1), insbesondere als Boden-oder Wandbelag, mit den folgenden Schritten:
- Extrudieren eines Formkörpers aus einer Mischung aus Naturfasern und einem Polymerwerkstoff oder anderen Kunststoffen mit mindestens einer Kammer, und
- Einbringen und Festlegen eines Verstärkungsprofils (5) in der mindestens einen Kammer.

13. Verfahren nach Anspruch 12, **dadurch gekennzeichnet, dass** das Verstärkungsprofil (5) während der Extrusion zugeführt und in den Formkörper einextrudiert wird.

14. Verfahren nach Anspruch 12, **dadurch gekennzeichnet, dass** das Verstärkungsprofil (5) in den noch erwärmten Formkörper eingeschoben wird und das Verstärkungsprofil (5) durch Abkühlen des Formkörpers auf Umgebungstemperatur klemmend in der Kammer festgelegt wird.

15. Verfahren nach Anspruch 12, **dadurch gekennzeichnet, dass** das Verstärkungsprofil (5) in die Kammer des Formkörpers eingeklebt wird.

16. Verfahren nach einem der Ansprüche 12 bis 15, **dadurch gekennzeichnet, dass** der Formkörper mit einem Naturfaseranteil von mehr als 50 %, insbesondere mehr als 65 %, extrudiert wird.
